# EUROPÄISCHE PATENTSCHRIFT

(11) **EP 1 943 977 B1**
(45) Veröffentlichungstag und Bekanntmachung des Hinweises auf die Patenterteilung: **29.06.2011**
(21) Anmeldenummer: 07000588.9
(22) Anmeldetag: 12.01.2007
(51) Int. Cl.: A61C 8/00, A61C 19/06

(54) **Zahnmedizinisches Implantat und zahnmedizinischer Implantataufbau**
Dental implant and dental abutment
Implant dentaire et faux-moignon

(43) Veröffentlichungstag der Anmeldung: 16.07.2008
(73) Patentinhaber: ZL Microdent-Attachment GmbH & Co. KG, 58339 Breckerfeld (DE)
(72) Erfinder: Graf, Hans-Ludwig Prof. Dr. med. dent., 04451 Panitzsch (DE)
(74) Vertreter: Kötter, Ulrich

(56) Entgegenhaltungen:
- EP-A2- 0 823 243
- WO-A-2007/005679
- US-A1- 2005 256 540

## Beschreibung

Die Erfindung betrifft ein zahnmedizinisches Implantat nach dem Oberbegriff des Patentanspruchs 1 sowie einen zahnmedizinischen Implantataufbau zur Befestigung in einem zahnmedizinischen Implantat nach dem Oberbegriff des Patentanspruchs 5.

Zahnärztliche Implantatsysteme werden häufig als zwei- und mehrteilige Konstruktionen ausgeführt, um zum Einen eine unbelastete Einheilung des eigentlichen Implantatkörpers zu ermöglichen und zum Anderen eine gute Servicebarkeit über die gesamte Verweildauer des Therapiemittels im Körper zu erreichen. Dies hat zwingend zur Folge, dass die Konstruktionen innere Spalten und Hohlräume aufweisen, die mit Körperflüssigkeiten gefüllt und von Mikroorganismen besiedelt werden können. Im Zuge dieses Vorganges entstehen gesetzmäßig Biofilme an den inneren Implantatoberflächen. Biofilme sind adsorbierte körpereigene Stoffe auf einer alloplastischen Oberfläche in denen Mikroorganismen (vor allem Bakterien) leben. Diese Mikroorganismen sind durch die eigentümliche Struktur des Biofilmes gegen angreifende Therapeutika (z. B. Antibiotika) so gut geschützt, dass allgemein davon ausgegangen wird, dass diese Erreger mit normalen Antibiotikadosen nicht oder nur sehr schwer angreifbar sind. Außer dem Aufbau derartiger Biofilme wird auch das gesamte Volumen der innerimplantären Hohlräume mit biogenem Material und Mikroorganismen gefüllt. Die Folge davon ist eine innere Kontamination der Implantatkonstruktion, die in Geruch und Geschmack, weitgehend auch in der mikrobiellen Erregerzusammensetzung dem Krankheitsbild einer Gangrän am natürlichen Zahn gleicht. Diese Besiedlung mit Mikroorganismen kann die Entzündung der periimplantären Gewebe (Periimplantitis) auslösen oder begünstigen, welche wiederum die Funktionsdauer eines Implantates begrenzt. Implantatsysteme bei denen nichtklebende lasttragende elastische Bauteile an der technischen Ausbildung der Schnittstelle zwischen Implantat und Aufbauteil beteiligt und die verbleibenden Hohlräume nicht gefüllt sind, zeigen durch den unter der intermittierenden (Kau-)Last eintretenden Pumpeffekt eine so starke mikrobielle Besiedlung, dass durch das regelmäßige Auspressen des mikrobiellen Implantatinhaltes in das periimplantäre Gewebe verstärkt Knochenabbauvorgänge ausgelöst werden.

Mit mechanischen Mitteln ist es bisher nicht gelungen, einen dauerhaften bakteriendichten Abschluss des Implantatinneren gegen die umgebenden Körperstrukturen zu realisieren und damit eine Besiedelung dieser Hohlräume mit Mikroorganismen dauerhaft zu verhindern.

Bekannt sind die Lösungen über eine innere Quetschkonuspassung, eine äußere Dichtlippenpassung und über einen in der Implantatinnenverbindung platzierten O-Ring. Allen Konstruktionen ist eigen, dass sie in vitro ohne mechanische Last den gestellten Anforderungen gerecht werden. Da die Implantat-Aufbauteile unter Last jedoch trotz ausgeklügelter Schnittstellengeometrien und der über die Verschraubung aufgebauten Verspannungen zwischen Implantat und Aufbauteil lastabhängig kippende Bewegungen ausführen, ist von einer immer wiederkehrenden Öffnung der Abdichtung zwischen Implantat und Aufbauteil auszugehen. Entsprechende innere Besiedelungen wurden nachgewiesen. Auch die tägliche klinische Praxis lässt bei Recall-Untersuchungen, bei denen die Verbindung zwischen Implantat und Aufbauteil gelöst wird, die während der Nutzung eingetretene mikrobielle Besiedelung am fötiden Geruch erkennen.

Weiterhin ist bekannt, ein Implantat-Aufbauteil ohne Schraube in einem Implantat mittels geklebter Clip-Verbindung zu befestigen. Mit der Klebung ist eine Füllung der inneren Hohlräume des Implantates verbunden. Der Kleber wird dabei im aktivierten Zustand von außen über ein aufwendiges handhabungsunfreundliches Dosiersystem eingebracht. Dieses Dosiersystem ist (trotz verschiedener technischer Lösungen) in der Präzision seiner Dosiermöglichkeit durch die Aufwendigkeit der Konstruktion begrenzt, da die Beschaffung durch jede Zahnarztpraxis einen marktfähigen Preis voraussetzt. Außerdem beginnt die Verarbeitungszeit des Klebers bereits bei der Mischung der Komponenten im Dosiersystem, so dass bei Verklebung mehrere Implantate mit einem Kleber aus einunddemselben Gebinde eine mit zunehmender Implantatzahl abnehmende Manipulationszeit pro Implantat entsteht.

Um die innere Kontamination und Besiedelung zwei- und mehrteiliger Implantatkonstruktionen mit Körperflüssigkeiten und Erregern zu verhindern, ist ein dauerhafter Abschluss der innerimplantären Hohlräume gegen die keimbeladene Umgebung durch eine Füllmasse erforderlich.

Aus der WO 2007/005679 A ist ein zahnmedizinisches Implantat zur Befestigung in einem Kieferknochen mit einer Vorrichtung zur gesteuerten intraofferen Verabreichung eines in einer Kapsel vorgehaltenen Medikaments bekannt. Die Kapsel ist in einer Sackbohrung des Implantats angeordnet. Die Steuerung erfolgt über eine externe in einem benachbarten weiteren Implantat angeordnete Steuereinrichtung.

Aufgabe der Erfindung ist es, Mittel zur Verfüllung von nach Einbringung eines Aufbaus in ein Implantat verbleibenden Hohlräumen bereit zu stellen, welche die vorgenannten Nachteile vermeidet. Gemäß der Erfindung wird diese Aufgabe durch die Merkmale des kennzeichnenden Teils des Patentanspruchs 1 gelöst. Mit der Erfindung ist ein zahnmedizinisches Implantat geschaffen, welches die Verfüllung von innerimplantären Hohlräumen ermöglicht. Die Verfüllung erfolgt durch ein in ein Gebinde gefülltes Fluid, welches in das Reservoir applizierbar ist. Bevorzugt ist das Reservoir am Grund der Sackbohrung angeordnet. Im Bereich der Bohrspitze ist die Herstellung eines Reservoirs mit nur geringem fertigungstechnischem Aufwand erzielbar. In das Innengewinde ist wenigstens ein Kanal zur Verteilung des Fluids des Gebindes nach dessen Zerstörung eingebracht, wodurch die Verfüllung auch höher gelegener Hohlräume erzielt ist.

In Weiterbildung der Erfindung sind im Bereich des Reservoirs Mittel zur Zerstörung des Gebindes angeordnet. Hierdurch ist eine gezielte Zerstörung des Gebindes ermöglicht, wodurch der Verfüllvorgang beeinflussbar ist. Bevorzugt ist das Mittel zur Zerstörung des Gebindes eine nach innen ragende Spitze.

In Ausgestaltung der Erfindung ist in dem Reservoir ein mit wenigstens einem Fluid gefülltes Gebinde angeordnet. Hierdurch ist eine nachträgliche Applikation des Reservoirs mit dem Gebinde vermieden, wodurch eine geringere Belastung des Patienten erzielt ist.

In weiterer Ausgestaltung der Erfindung ist in dem zahnmedizinischen Implantat ein zahnmedizinischer Implantataufbau vorhanden, umfassend einen Gewindezapfen, der in die mit wenigstens einem Innengewinde versehene Sackbohrung des zahnmedizinischen Implantats einschraubbar ist, wobei der Gewindezapfen Mittel zur Zerstörung eines innerhalb der Sackbohrung angeordneten fluidgefüllten Gebindes aufweist. Durch das Vorsehen von Mitteln zur Zerstörung eines innerhalb der Sackbohrung angeordneten mit Fluid gefüllten Gebindes an dem Gewindezapfen des Implantataufbaus ist eine gezielte Zerstörung des Gebindes ermöglicht. Bevorzugt ist das Mittel zur Zerstörung des mit Fluid gefüllten Gebindes eine am Ende des Gewindezapfens angeordnete Spitze.

Die gestellte Aufgabe wird weiterhin gelöst durch einen zahnmedizinischen Implantataufbau zur Befestigung in einem zahnmedizinischen Implantat nach dem Patentanspruch 7. Durch das Vorsehen einer Aufnahme in dem Gewindezapfen ist eine Fixierung eines fluidgefüllten Gebindes ermöglicht. Dadurch, dass in dem Gewindezapfen wenigstens ein Kanal zur Verteilung des Fluids des Gebindes nach dessen Zerstörung eingebracht ist, ist die Verfüllung auch höher gelegener Hohlräume erzielt.

Bevorzugt weist die Aufnahme Mittel zur Zerstörung des fluidgefüllten Gebindes auf. Hierdurch ist eine gezielte Zerstörung des Gebindes ermöglicht. Bevorzugt ist das Mittel zur Zerstörung des fluidgefüllten Gebindes eine innerhalb der Aufnahme angeordnete Spitze.

Die Konfektionierung und Portionierung des Fluids als Gebinde kann außerhalb der Zahnarztpraxis stattfinden. Aufwändige Dosiermittel sind im Zuge der Applikation nicht erforderlich.

Das Gebinde kann eine Kapsel sein. Kapselartige Gebinde lassen sich besonders gut handhaben und sind entsprechend präzise applizierbar.

Das Gebinde kann Rastmittel zur Befestigung in einer Aufnahme der Schraube eines Aufbaus aufweisen Hierdurch ist eine sichere Fixierung des Gebindes in der Aufnahme ermöglicht. Bevorzugt ist das Rastmittel eine zumindest teilweise umlaufende Wulst.

Das Gebinde kann wenigstens zwei fluidgefüllte Kammern aufweisen. Hierdurch ist der Einsatz von Mehrkomponentenfluiden ermöglicht, welche erst nach Zerstörung des Gebindes miteinander in Kontakt treten und reagieren. Weiterhin ist die Verfüllung der innerimplantären Hohlräume mit unterschiedlichen Fluiden unterschiedlicher Wirkungsweisen ermöglicht. Andere Weiterbildungen und Ausgestaltungen der Erfindung sind in den abhängigen Ansprüchen angegeben. Ein Ausführungsbeispiel der Erfindung ist in den Zeichnungen dargestellt und wird nachfolgend im Einzelnen beschrieben. Es zeigen:

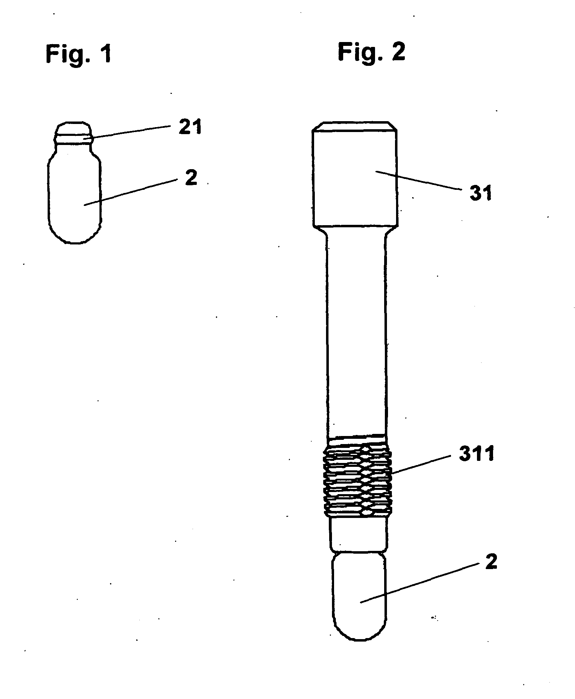

- Figur 1: die Darstellung eines Gebindes zur Einbringung in ein zahnmedizinisches Implantat;
- Figur 2: die Darstellung einer Schraube eines Implantataufbaus mit einem Gebinde gemäß Figur 1;

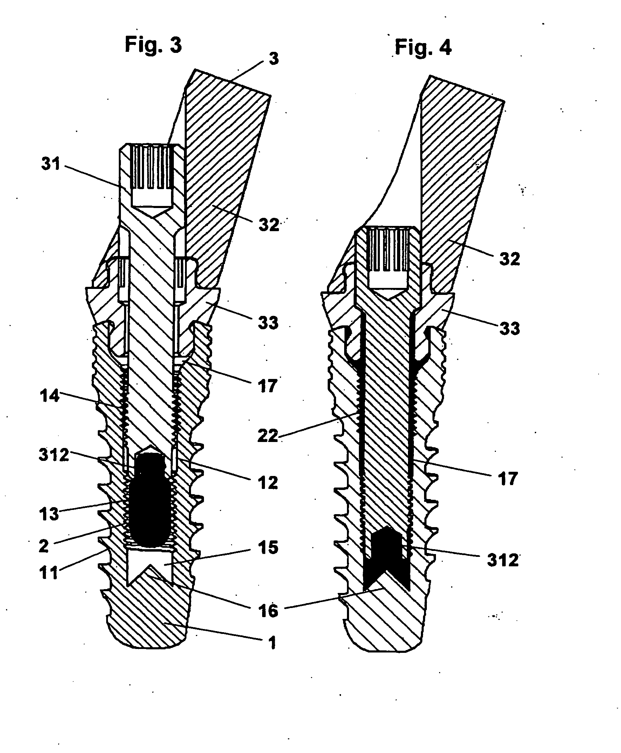

- Figur 3: die Schnittdarstellung eines Implantats mit Implantataufbau mit eingesetztem Gebinde vor dem Einschraubvorgang;
- Figur 4: die Schnittdarstellung des Implantats mit Implantataufbau gemäß Figur 3 nach Beendigung des Einschraubvorgangs und Zerstörung des Gebindes;
- Figur 5: die Schnittdarstellung des Implantats mit Implantataufbau gemäß Figur 3 in einer weiteren Ausführungsform und
- Figur 6: die Schnittdarstellung des Implantats mit Implantataufbau gemäß Figur 5 nach Beendigung des Einschraubvorgangs und Zerstörung des Gebindes.

Das als Ausführungsbeispiel gewählte Implantat 1 ist aus Titan hergestellt und ist außen umlaufend mit einem Außengewinde 11 versehen. Entlang seiner Mittelachse ist in das Implantat 1 eine Sackbohrung 12 eingebracht, in die beabstandet zueinander zwei Innengewinde 13, 14 eingebracht sind. Dabei ist der Innendurchmesser des dem Grund der Sackbohrung 12 zugewandten Endgewindes 13 kleiner ausgeführt, als der Innendurchmesser des nach außen gerichteten Opfergewindes 14. Im Ausführungsbeispiel ist das Endgewinde 13 in der Größe M 1,6 x 0,2 und das Opfergewinde 14 in der Größe M 1,8 x 0,2 ausgebildet. Zwischen Endgewinde 13 und Opfergewinde 14 ist ein gewindeloses Zwischenstück angeordnet. Unterhalb des Endgewindes 13 ist ein Reservoir 15 zur Anordnung eines mit einem Fluid gefüllten Gebindes 2 vorgesehen. Am Grund der Sackbohrung 12 ist eine Spitze 16 zur definierten Zerstörung des Gebindes 2 angeformt. Das als Ausführungsbeispiel gewählte Gebinde 2 ist in Art einer flaschenförmigen Kapsel ausgeführt, die nach oben hin verjüngt ausgebildet ist. Im Bereich der Verjüngung ist an die Kapsel 3 eine umlaufende Wulst 21 angeformt. Das Gebinde 2 ist mit einem Fluid 22 gefüllt. Im Ausführungsbeispiel ist das Fluid 22 ein Kleber mit desinfizierender Wirkung. Alternativ kann das Gebinde auch mit Zement, Kleber oder sonstigen geeigneten Fluiden gefüllt sein.

Der als Ausführungsbeispiel gewählte Implantataufbau ist dreiteilig ausgebildet. Er besteht im Wesentlichen aus einem Aufbaupfosten 32, der auf einem Adapterstück 33 angeordnet ist, wobei durch den Aufbaupfosten 32 das Adapterstück 33 eine Schraube 31 geführt ist. Das Adapterstück 33 ist derart ausgebildet, dass es in das Implantat 1 einsetzbar ist, wobei ein konisch nach innen zulaufender Rand ausgebildet ist, der mit dem konisch ausgebildeten Rand des Implantats 1 korrespondiert. Die Schraube 31 weist an ihrem dem Implantat zugewandten Ende einen Gewindezapfen 311 auf. Der Gewindezapfen 311 ist mit zwei diametral zueinander angeordneten - nicht dargestellten - Kanälen versehen, welche parallel zur Mittelachse der Schraube 31 das Außengewinde des Gewindezapfen 311 kreuzend in die Schraube 31 eingebracht sind. Endseitig ist in den Gewindezapfen 311 der Schraube 31 eine Aufnahme 312 eingebracht. Die Aufnahme 312 ist in Art einer Sackbohrung ausgeführt. An der Innenwandung der Aufnahme 312 ist eine - nicht dargestellte - Nut zur Aufnahme der Wulst 21 des Gebindes 2 eingebracht.

Vor der Befestigung des Implantataufbaus 3 in dem Implantat 1 wird das Gebinde 2 derart in die Aufnahme 312 des Gewindezapfens 311 der Schraube 31 des Implantataufbaus 3 eingebracht, dass die Wulst 21 des Gewindes 2 in die - nicht dargestellte - Nut innerhalb der Aufnahme 312 eingreift. Anschließend wird der Implantataufbau 3 mit dem Adapterstück 33 auf das Implantat 1 aufgesetzt und die Schraube 31 wird mit Ihrem Gewindezapfen 311 in das Endgewinde 13 des Implantats 1 eingeschraubt. Hierbei wird das Gebinde 2 gegen die Spitze 16 des Implantats 1 gepresst, wobei das Gebinde 2 zerstört wird. Das Fluid 22 des Gebindes 2 wird im Zuge des weiteren Einschraubprozesses der Schraube 31 komprimiert und in über die in dem Gewindezapfen 311 eingebrachten - nicht dargestellten - Kanäle in die Hohlräume zwischen Implantat 1 und Schraube 31 bzw. Adapterstück 33 gepresst. Nach vollständigem Einschrauben der Schraube 31 mit dem Gewindezapfen 311 in das Endgewinde 13 des Implantats 1 sind die innerimplantären Hohlräume vollständig mit dem Fluid 22 des Gebindes 2 verfüllt.

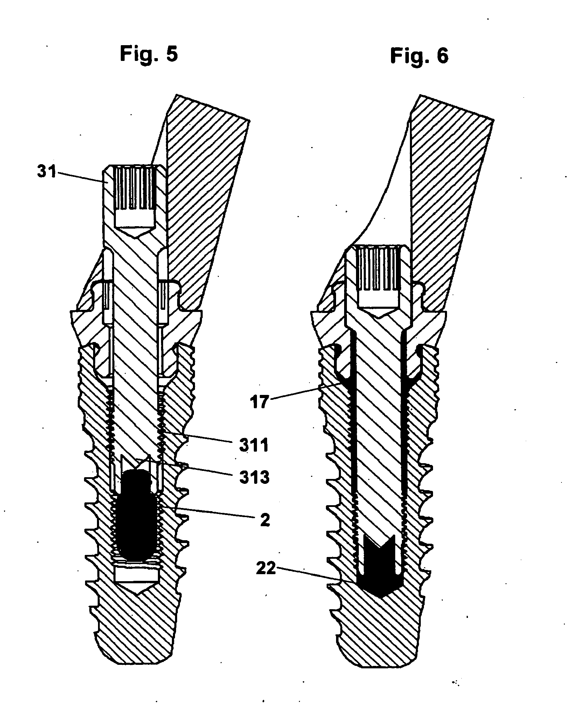

Im Ausführungsbeispiel gemäß Figuren 5 und 6 ist an Stelle der Spitze 15 des Implantats 1 an dem Gewindezapfen 311 innerhalb der Aufnahme 312 eine Spitze 313 angeformt. Hierdurch wird das Gebinde 2 im Zuge des Einschraubprozesses der Schraube 31 mit dem Gewindezapfen 311 in das Endgewinde 13 des Implantats 1 von oben zerstört. Die innerimplantären Hohlräume werden gleichsam mit dem Fluid 22 des Gebindes 2 verfüllt, wobei im Ausführungsbeispiel gemäß Figuren 5 und 6 die Innengewinde 13, 14 mit - nicht dargestellten - Kanälen zur Verteilung des Fluids 22 versehen sind. Im Ausführungsbeispiel sind zwei diametral zueinander angeordnete Kanäle parallel zur Mittelachse der Sackbohrung 12 des Implantats 1 die Gewinde 13, 14 kreuzend in die Sackbohrung 12 eingebracht.

## Patentansprüche

1. Zahnmedizinisches Implantat zur Befestigung in einem Kieferknochen und zur Aufnahme eines Gewindezapfens (311) eines zahnmedizinischen Implantataufbaus (3), wobei in das Implantat (1) eine Sackbohrung (12) eingebracht ist, in der wenigstens ein Innengewinde (13, 14) angeordnet ist, wobei in der Sackbohrung wenigstens ein Reservoir (15) zur Anordnung eines mit einem Fluid gefüllten Gebinde (2) vorhanden ist, **dadurch gekennzeichnet, dass** in das Innengewinde (13, 14) wenigstens ein Kanal eingebracht ist zur Verteilung des Fluids (22) des Gebindes (2) nach dessen Zerstörung im Zuge der Einbringung des zahnmedizinischen Implantataufbaus (3) in das zahnmedizinische Implantat (1), so dass das Fluid (22) in die innerimplantären Hohlräume gepresst wird.

2. Zahnmedizinisches Implantat nach Anspruch 1, **dadurch gekennzeichnet, dass** im Bereich des Reservoirs (15) Mittel (16) zur Zerstörung des Gebindes angeordnet sind.

3. Zahnmedizinisches Implantat nach Anspruch 2, **dadurch gekennzeichnet, dass** das Mittel (16) zur Zerstörung des Gebindes eine nach innen ragende Spitze ist.

4. Zahnmedizinisches Implantat nach einem der vorgenannten Ansprüche, **dadurch gekennzeichnet, dass** in dem Reservoir (15) ein mit wenigstens einem Fluid (22) gefülltes Gebinde (2) angeordnet ist.

5. Zahnmedizinisches Implantat nach einem der Ansprüche 1 bis 4, **dadurch gekennzeichnet, dass** ein zahnmedizinischer Implantataufbau (3) zur Befestigung in dem zahnmedizinischen Implantat vorhanden ist, umfassend einem Gewindezapfen (311), der in die mit wenigstens einem Innengewinde (13, 14) versehene Sachbohrung (12) des zahnmedizinischen Implantats (1) einschraubbar ist, wobei der Gewindezapfen (311) Mittel (313) zur Zerstörung eines innerhalb der Sackbohrung angeordneten fluidgefüllten Gebindes (2) aufweist.

6. Zahnmedizinisches Implantat nach Anspruch 5, **dadurch gekennzeichnet, dass** das Mittel (313) zur Zerstörung des fluidgefüllten Gebindes (2) eine am Ende des Gewindezapfens (311) angeordnete Spitze ist.

7. Zahnmedizinischer Implantataufbau zur Befestigung in einem zahnmedizinischen Implantat, umfassend einen Gewindezapfen (311), der in ein zahnmedizinisches Implantat (1) einschraubbar ist, **dadurch gekennzeichnet, dass** der Gewindezapfen (311) eine Aufnahme (312) zur Fixierung eines fluidgefüllten Gebindes (2), aufweist, wobei in dem Gewindezapfen wenigstens ein Kanal eingebracht ist zur Verteilung des Fluids (22) des Gebindes (2) nach dessen Zerstörung im Zuge der Einbringung des zahnmedizinischen Implantataufbaus (3) in das zahnmedizinische Implantat (1), so das Fluid (22) in die innerimplantären Hohlräume gepresst wird.

8. Zahnmedizinischer Implantataufbau nach Anspruch 7, **dadurch gekennzeichnet, dass** die Aufnahme (312) Mittel (313) zur Zerstörung des fluidgefüllten Gebindes (2) aufweist.

9. Zahnmedizinischer Implantataufbau nach Anspruch 8, **dadurch gekennzeichnet, dass** das Mittel (313) zur Zerstörung des fluidgefüllten Gebindes (2) eine innerhalb der Aufnahme (312) des Gewindezapfens (311) angeordnete Spitze ist.

## Claims

1. Dental implant to be fixed in a jawbone and to hold a threaded pin (311) of a dental abutment (3), where a blind hole (12) in which one or more internal screw threads (13, 14) is or are disposed is made in the implant (1), where one or more reservoirs (15) for the disposal of a container (2) filled with a fluid is or are disposed in the blind hole, **characterised in that**, while the dental abutment (3) is being fixed into the dental implant (1), one or more channels to distribute the fluid (22) of the container (2) after the container (2) is broken is or are made in the internal screw thread (13, 14) so that the fluid (22) is forced into the hollow spaces inside the implant.

2. Dental implant in accordance with claim 1, **characterised in that** a means (16) of breaking the container is disposed in the area of the reservoir (15).

3. Dental implant in accordance with claim 2, **characterised in that** the means (16) of breaking the container is a pointed member projecting inwards.

4. Dental implant in accordance with any one of the aforementioned claims, **characterised in that** a container (2) filled with at least one fluid (22) is disposed in the reservoir (15).

5. Dental implant in accordance with any one of claims 1 to 4, **characterised in that** a dental abutment (3) to be fixed in the dental implant is provided, which dental abutment (3) comprises a threaded pin (311) which can be screwed into the blind hole (12) in the dental implant (1) and which is provided with one or more inside threads (13, 14), where the threaded pin (311) incorporates a means (313) of breaking a fluid-filled container (2) inside the blind hole.

6. Dental implant in accordance with claim 5, **characterised in that** the means (313) of breaking the fluid-filled container (2) is a pointed member disposed at the end of the threaded pin (311).

7. Dental abutment to be fixed in a dental implant, comprising a threaded pin (311) which can be screwed into a dental implant (1), **characterised in that** the threaded pin (311) incorporates a holder (312) to hold a fluid-filled container (2), where, while the dental abutment (3) is being fixed into the dental implant (1), one or more channels to distribute the fluid (22) of the container (2) after the container (2) is broken is or are made in the internal screw thread (13, 14) so that the fluid (22) is forced into the hollow spaces inside the implant.

8. Dental abutment in accordance with claim 7, **characterised in that** the holder (312) incorporates a means (313) of breaking the fluid-filled container (2).

9. Dental abutment in accordance with claim 8, **characterised in that** the means (313) of breaking the fluid-filled container (2) is a pointed member disposed inside the holder (312) in the threaded pin (311).

## Revendications

1. Implant dentaire à fixer dans un os maxillaire et destiné à recevoir le pivot fileté (311) d'un faux moignon dentaire (3), sachant que dans l'implant (1) a été ménagé un alésage borgne (12), lequel alésage présente au moins un taraudage (13, 14), sachant que dans l'alésage borgne se trouve au moins un réservoir (15) permettant d'agencer un récipient (2) rempli de fluide, **caractérisé en ce qu'**au moins un canal a été ménagé dans le taraudage (13, 14) afin de répartir le fluide (22) après destruction du récipient (2) qui le contient pendant l'incorporation du faux moignon dentaire (3) dans l'implant dentaire (1), de sorte que le fluide (22) est injecté de force dans les cavités intra-implantaires

2. Implant dentaire selon la revendication 1, **caractérisé en ce que** dans la zone du réservoir (15) ont été disposés des moyens (16) permettant de détruire le récipient.

3. Implant dentaire selon la revendication 2, **caractérisé en ce que** le moyen (16) permettant de détruire le récipient est une pointe dardant vers l'intérieur.

4. Implant dentaire selon l'une des revendications précédentes, **caractérisé en ce que** dans le réservoir (15) est disposé un récipient (2) rempli d'au moins un fluide (22).

5. Implant dentaire selon l'une des revendications 1 à 4, **caractérisé en ce qu'**est présent un faux moignon dentaire (3) à fixer dans l'implant dentaire, comprenant un pivot fileté (311) qu'il est possible de visser dans un alésage borgne (12) de l'implant dentaire (1), alésage doté d'au moins un taraudage (13, 14), sachant que le pivot fileté (311) présente des moyens (313) permettant de détruire le récipient (2) rempli de fluide et situé à l'intérieur de l'alésage borgne.

6. Implant dentaire selon la revendication 5, **caractérisé en ce que** le moyen (313) servant à détruire le récipient (2) rempli de fluide est une pointe agencée à l'extrémité du pivot fileté (311).

7. Faux moignon dentaire à fixer dans un implant dentaire, comprenant un pivot fileté (311) à visser dans un implant dentaire (1), **caractérisé en ce que** le pivot fileté (311) présente un réceptacle (312) servant à immobiliser un récipient (2) rempli de fluide, sachant que dans le pivot fileté a été ménagé au moins un canal servant à répartir le fluide (22) que contenait le récipient (2) après destruction de ce dernier lors de l'introduction du faux moignon dentaire (3) dans l'implant dentaire (1), de sorte que le fluide (22) pénètre de force dans les cavités intra-implantaires.

8. Faux moignon dentaire selon la revendication 7, **caractérisé en ce que** le réceptacle (312) présente un moyen (313) servant à détruire le récipient (2) rempli de fluide.

9. Faux moignon dentaire selon la revendication 8, **caractérisé en ce que** le moyen (313) servant à détruire le récipient (2) rempli de fluide est une pointe agencée à l'intérieur du réceptacle (312) du pivot fileté (311).
